# EUROPEAN PATENT APPLICATION

(11) **EP 4 670 884 A1**
(43) Date of publication of application: **31.12.2025**
(21) Application number: 24185199.7
(22) Date of filing: 28.06.2024
(51) Int. Cl.: B23C 5/22

(54) **A CUTTING TOOL**

(71) Applicant: AB Sandvik Coromant, 811 81 Sandviken (SE)
(72) Inventor: CAMUZ, Soner, 811 81 Sandviken (SE)
(74) Representative: Sandvik

(57) **Abstract**

The invention relates to a cutting tool (1) having an insert seat (4) and a cutting insert (7) detachably mounted therein. A clamping element (13) serves to secure the cutting insert in the insert seat (4) by asserting a force in a center of the cutting insert, with a first force component towards a bottom surface (5) of the insert seat and a second force component (L2) perpendicular to the bottom surface. The bottom surface of the insert seat (4) is provided with three protrusions (15a-15c) forming three precise contact points for a bottom surface (9) of the cutting insert (7). A first protrusion (15a) is located close to the active cutting edge (11), a second protrusion (15b) is located close to the second force component and a third protrusion (15c) is located such that the protrusions together form a triangular shape.

## Description

### TECHNICAL FIELD OF THE INVENTION

The present invention relates to a cutting tool according to the preamble of claim 1.

Hence, the invention relates to cutting tools with one or more exchangeable cutting inserts each detachably mounted in an insert seat in a tool body of the cutting tool by a clamping element. Such a cutting tool may also be for instance a turning tool or a drilling tool, but a milling tool will be described as a typical example without restricting the invention thereto.

A cutting tool of the invention is typically attached to a Computer Numerical Control (CNC) machine by a rear shank end of the tool body and operated by said machine to cut chips from a workpiece by at least one active cutting edge of the at least one cutting portion located at a front cutting end of the tool body.

### BACKGROUND OF THE INVENTION AND PRIOR ART

This type of cutting tools have many advantages over cutting tools with solid tool bodies, i.e. with cutting edges formed in one piece with the tool body, such as increased tool life due to the fact that there is less wear on the tool body itself, but mainly the inserts are worn which are then replaced with new ones, reduced lead time during a cutting operation as a worn underperforming cutting edge may quickly be replaced instead of re-grinded, and increased versatility obtained by the possibility to provide one and the same tool body with different kinds of cutting inserts suitable for different machining operations, to mention a few examples.

While this type of cutting tools offer certain advantages, they also present a set of challenges, primarily due to their complex structure with a higher number of individual components compared to solid cutting tools. For these tools to perform optimally, it's essential that the cutting inserts are precisely positioned and remain stable throughout the entire cutting or processing operation.

The characteristics of the tool should be preserved as much as possible during a cutting operation. This includes maintaining its properties under various conditions such as exposure to cutting forces, vibrations, and other operational stresses. Moreover, the tool should retain a high performance even after some degree of wear on both the insert and the tool body.

One of the key aspects to consider is the reduction of wear on the various components of the cutting tool. By minimizing wear, the performance of the tool may be enhanced and its lifespan extended. These are just a few of many aspects having impact on the performance of a cutting tool of this type.

A significant number of these challenges are associated with and influenced by the interface between the cutting insert and the insert seat of the tool body. There is a wide variety of interfaces between cutting inserts and insert seats at cutting tools of this type already known and on the market today, each having different impacts on the aforementioned challenges. Examples include interlocking interfaces (US9682433, US8313270, US7819610, US7637701), plane surfaces at various angles (US8596933), and distance elements on the cutting inserts (US8753045, US6126366) and/or the tool body (US8568065, US7429150).

There is a continuous effort to improve the arrangement of cutting inserts in the insert seats of this type of cutting tools. This includes considering the parameters or aspects mentioned above and finding ways to optimize them for better performance.

### SUMMARY OF THE INVENTION

The object of the present invention is to provide a cutting tool of the type defined in the introduction, which cutting tool is being improved in at least some aspect with respect to such cutting tools already known, especially providing improved fixation and stability of the at least one cutting insert in the insert seat thereby reduced unwanted movement of the cutting insert relative to the tool body during a cutting operation, which in turn leads to increased performance and reduced wear during use of the cutting tool.

This object is according to the invention obtained by providing such a cutting tool by which the first support surface of the insert seat is provided with at least three protrusions forming first, second and third contact points at the first support surface for the bottom surface of the cutting insert,
wherein the at least three protrusions are positioned on the first support surface of the insert seat such that, in a top view straight towards the first support surface,
a first protrusion is located between the recess center and the edge support point, wherein a distance from a first protrusion center to the recess center is larger than a distance from the first protrusion center to the edge support point,
a second protrusion is located between the recess center and the second support surface of the insert seat, wherein an angle formed between a first imaginary straight line from the recess center to a second protrusion center and a second imaginary straight line from the recess center in the direction of the second force component is 20 degrees or less, and
a third protrusion is located in a position such that imaginary straight lines connecting the first protrusion center, the second protrusion center and the third protrusion center together form a first triangular shape enclosing the recess center.

The three protrusions provide multiple strategically positioned contact points for the bottom surface of the cutting insert, enhancing the stability of the insert in the insert seat. The positioning of the protrusions is especially made to reduce unwanted movement of the cutting insert relative to the tool body during a cutting operation with the cutting tool. This leads to increased performance and reduced wear during use thereof.

Also, the specific arrangement of the protrusions allows for an optimized distribution of forces in the cutting insert and insert seat during a cutting operation which improves the efficiency of cutting and reduces wear on both the insert and the tool body further.

According to an embodiment of the invention the recess of the cutting insert is arranged in a center of the top surface thereof.

According to another embodiment of the invention the recess of the cutting insert is in the form of a through hole extending from an entry in the top surface to an exit in the bottom surface of the cutting insert, the first support surface of the insert seat is provided with a central bore, and the clamping element is a threaded fastener.

According to another embodiment of the invention, in the top view straight towards the first support surface of the insert seat, an imaginary straight line extending in a direction of a longitudinal extension of the tool body through the recess center and an imaginary straight line extending perpendicular to said direction through the recess center together divide the first support surface of the insert seat into four quadrants, wherein a first quadrant is the quadrant in which the second force component extends and the second, third and fourth quadrants follow the first quadrant in that order in a clockwise direction, and wherein the first protrusion center is located in the third quadrant, the second protrusion center is located in the first quadrant and the third protrusion center is located in the second quadrant.

According to another embodiment of the invention, in the top view straight towards the first support surface of the insert seat, imaginary straight lines connecting the second protrusion center, the third protrusion center and the recess center together form a second triangular shape, imaginary straight lines connecting the third protrusion center, the first protrusion center and the recess center together form a third triangular shape and imaginary straight lines connecting the first protrusion center, the second protrusion center and the recess center together form a fourth triangular shape, wherein the second, third and fourth triangular shapes together constitute said first triangular shape and wherein the surface area of the triangular shape of the second, third and fourth triangular shapes with the largest surface area is less than 30% larger, preferably less than 20% larger and more preferably less than 10% larger than the surface area of the triangular shape of the second, third and fourth triangular shapes with the smallest surface area.

According to another embodiment of the invention, in the top view straight towards the first support surface of the insert seat, the distance from the first protrusion center to the recess center is at least 2 times, preferably at least 2.5 times, more preferably at least 3 times and even more preferably at least 3.5 times larger than the distance from the first protrusion center to the edge support point.

According to another embodiment of the invention, in the top view straight towards the first support surface of the insert seat, the angle formed between the first imaginary straight line and the second imaginary straight line is 15 degrees or less, more preferably 10 degrees or less.

According to another embodiment of the invention, in the top view straight towards the first support surface of the insert seat, the second imaginary straight line intersect the second protrusion. According to another embodiment of the invention the second support surface is arranged to extend at a first peripheral side of the first support surface away from the first support surface in a said second plane forming an angle of 70-110 degrees with the first plane in which the first support surface extends.

According to another embodiment of the invention the second support surface is provided with a fourth protrusion forming a first contact point for the peripheral surface of the cutting insert at the second support surface thereby a fourth contact point for the cutting insert in the insert seat.

According to another embodiment of the invention, in a side view of the insert seat along the first support surface and towards the second support surface, the second support surface has a front end and an opposite rear end, as seen in a direction of a longitudinal extension of the tool body, as well as a bottom end by which the second support surface is connected to the first support surface and an opposite top end located farthest away from the first support surface, wherein the fourth protrusion is arranged such that a distance from a fourth protrusion center to the bottom end of the second support surface is larger than a distance from the fourth protrusion center to the top end of the second support surface and a distance from the fourth protrusion center to the rear end of the second support surface is larger than a distance from the fourth protrusion center to the front end of the second support surface.

According to another embodiment of the invention the insert seat further has a third support surface extending in a third plane forming an angle with each of the first and the second planes, wherein the third support surface is arranged to extend at a second peripheral side of the first support surface away from the first support surface in a said third plane forming an angle of 70-110 degrees with the first plane in which the first support surface extends, and wherein the third support surface is provided with a fifth protrusion forming a first contact point for the peripheral surface of the cutting insert at the third support surface thereby a fifth contact point for the cutting insert in the insert seat.

According to another embodiment of the invention, in a front view of the insert seat along the first support surface and straight towards the third support surface, the third support surface has an inner end by which it is connected to the rear end of the second support surface, and an opposite outer end located closer to a peripheral surface of the tool body than the inner end, as well as a bottom end by which the third support surface is connected to the first support surface and an opposite top end located farthest away from the first support surface, wherein the fifth protrusion is arranged such that a distance from the fifth protrusion center to the top end of the third support surface is larger than a distance from a fifth protrusion center to the bottom end of the third support surface and a distance from the fifth protrusion center to the outer end of the third support surface is larger than a distance from the fifth protrusion center to the inner end of the third support surface.

According to another embodiment of the invention the second support surface is further provided with a sixth protrusion forming a second contact point for the peripheral surface of the cutting insert at the second support surface, wherein the sixth protrusion is arranged with a center thereof between the fourth protrusion center and the rear end of the second support surface as seen in a length direction of the second support surface from the front towards the rear end thereof, and between the fourth protrusion center and the top end of the second support surface as seen in a height direction of the second support surface from the bottom towards the top end thereof, and wherein, in the top view straight towards the first support surface of the insert seat, the second imaginary straight line intersect the sixth protrusion.

According to another embodiment of the invention each said protrusion is formed with a convex contact surface thereby configured to provide a precise point of contact against the associated surface of the cutting insert in contact therewith.

According to another embodiment of the invention the clamping element is a clamping screw.

According to another embodiment of the invention the fourth protrusion is arranged such that a distance from a fourth protrusion center to the bottom end of the second support surface is at least 1.2 times, preferably at least 1.3 times larger than a distance from the fourth protrusion center to the top end of the second support surface and a distance from the fourth protrusion center to the rear end of the second support surface is at least 3 times, preferably at least 4 times, more preferably at least 5 times, and most preferably at least 6 times larger than a distance from the fourth protrusion center to the front end of the second support surface.

According to another embodiment of the invention the fifth protrusion is arranged such that a distance from the fifth protrusion center to the top end of the third support surface is at least 3 times, preferably at least 4 times, more preferably at least 5 times, and most preferably at least 6 times larger than a distance from a fifth protrusion center to the bottom end of the third support surface and a distance from the fifth protrusion center to the outer end of the third support surface is at least 3 times, preferably at least 4 times, more preferably at least 5 times, and most preferably at least 6 times larger than a distance from the fifth protrusion center to the inner end of the third support surface.

According to another embodiment of the invention the cutting insert further has a corner part provided with a corner cutting edge portion at a transition between the top surface and the peripheral surface of the cutting insert at the corner part, wherein the corner cutting edge portion interconnects the primary cutting edge portion and the secondary cutting edge portion such that they together form the active cutting edge.

According to another embodiment of the invention the cutting tool is a milling tool, especially a square shoulder milling tool.

According to another embodiment of the invention each of the first, second and third protrusions has a convex shape so as to provide a precise point of contact against the bottom surface of the cutting insert.

According to another embodiment of the invention each of the first, second and third protrusions has a semi-ellipsoid or semi-spherical shape.

According to another embodiment of the invention each of said protrusions has a semi-ellipsoid or semi-spherical shape.

According to another embodiment of the invention, as seen in the top view straight towards the first support surface of the insert seat, each of the first, second and third protrusions has a surface area which is smaller than the cross-sectional area of the central bore in the first support surface.

Further advantages and advantageous features of the invention will appear from the following detailed description of an embodiment of the invention.

### BRIEF DESCRIPTION OF THE DRAWINGS

With reference to the appended drawings, below follows a specific description of an embodiment of the invention cited as an example.

In the drawings:
- Fig. 1: is a perspective exploded view obliquely from a front end of a cutting tool according to an embodiment of the invention in the form of a milling tool,
- Fig. 2: is a top detail view of a cutting portion of the cutting tool of Fig. 1, with the cutting insert detachably mounted in the fixed position in the insert seat of the cutting portion, in the tool body,
- Fig. 3: is a view corresponding to Fig. 2, showing the insert seat of the cutting portion without cutting insert and clamping element,
- Fig. 4: is a perspective view obliquely from a front end of the cutting tool showing the insert seat of Figs. 2-3 without cutting insert and clamping element,
- Fig. 5: is a detail side-elevation view of the insert seat of Fig. 4, in a direction towards the second support surface thereof, and
- Fig. 6: is a slightly perspective view from a front end of the insert seat of Fig. 4, in a direction towards the third support surface thereof.

### DETAILED DESCRIPTION OF AN EMBODIMENT OF THE INVENTION

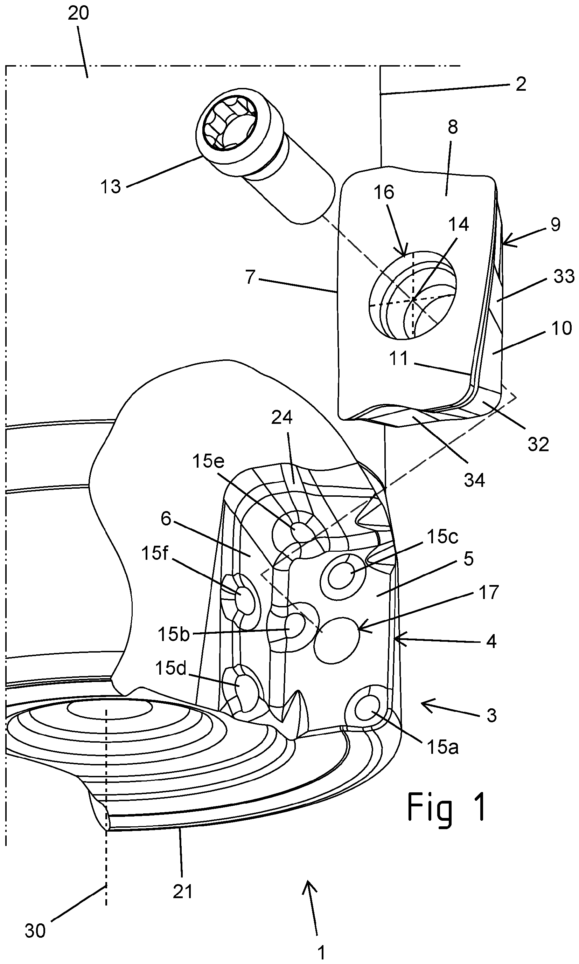

A cutting tool 1 according to an embodiment of the present invention is illustrated in Figs 1-6 and will now be described while at the same time making reference to all these drawings.

The cutting tool 1, which is a milling tool and more precisely a square shoulder milling tool, comprises a tool body 2 having a rear shank end 20 configured for attachment to a machine, such as a CNC-machine, and an opposite front cutting end 21 provided with at least one cutting portion 3. A longitudinal extension of the tool body 2 is measured from the rear shank end 20 to the front cutting end 21 and is at the tool shown defined by a central longitudinal axis 30 coinciding with the axis of rotation of the milling tool. Hence, an axial direction of the tool body 2 and cutting tool 1 is the same as a longitudinal direction thereof.

In the embodiment shown the tool body 2 is provided with two cutting portions, each having an insert seat for accommodating a respective cutting insert. As these cutting portions have the exact same configuration only one of these is fully shown in the drawings and described in detail hereafter and the description of the structure and function thereof is also valid for the other cutting portion, as well as for all cutting portions in the case of a cutting tool with more than two cutting portions. The number of cutting portions with insert seats and cutting inserts at the tool body of a cutting tool according to the invention are most commonly 1-12.

As already mentioned, the cutting portion 3 comprises an insert seat 4, which has a first support surface 5 forming a bottom surface of the insert seat, extending in a first plane, and a second support surface 6 forming a first side wall of the insert seat, extending in a second plane forming an angle with the first plane. The insert seat 4 further has a third support surface 24 extending in a third plane forming an angle with each of the first and the second planes and forming a second side wall of the insert seat.

The second support surface 6 is arranged to extend at a first peripheral side of the first support surface 5 away from the first support surface 5 in a said second plane forming an angle of 70-110 degrees with the first plane in which the first support surface 5 extends and the third support surface 24 is arranged to extend at a second peripheral side of the first support surface 5 away from the first support surface 5 in a said third plane forming an angle of 70-110 degrees with the first plane in which the first support surface 5 extends. Hence, the first 5, second 6 and third 24 support surfaces are arranged to together form a pocket-like insert seat 4.

The cutting portion 3 further comprises a cutting insert 7 and a clamping element 13 in the form of a threaded fastener or clamping screw to fixedly secure the cutting insert in a fixed position in the insert seat 4. The cutting insert 7 has a top surface 8, an opposite bottom surface 9 and a peripheral surface 10 extending between thereby interconnecting the top and bottom surfaces around the periphery of the cutting insert.

The cutting insert 7 has a cutting edge 11, which includes a primary cutting edge portion 11a at a long side 33 of the cutting insert, a secondary cutting edge portion 11b at a short side 34 of the cutting insert, and a corner cutting edge portion 31 interconnecting the primary and secondary cutting edge portions over a corner part 32 of the cutting insert 7 forming a transition between said short and long sides. These cutting edge portions 11a, 11b, 31 are formed at a transition between the top surface 8 and the peripheral surface 10 at the long side, forming a first flank surface, the short side, forming a second flank surface, and the corner part, respectively. The cutting insert 7 is further provided with a diametrically opposite similar cutting edge making the cutting insert 180 degrees indexable, i.e. provided with two usable cutting edges.

The cutting insert 7 further has a recess 16 arranged in the center of the top surface 8 thereof. More specifically, the recess 16 is in the form of a through hole extending from an entry in the top surface 8 to an exit in the bottom surface 9 of the cutting insert 7, i.e. straight through the cutting insert 7 from the top 8 to the bottom 9 surface thereof.

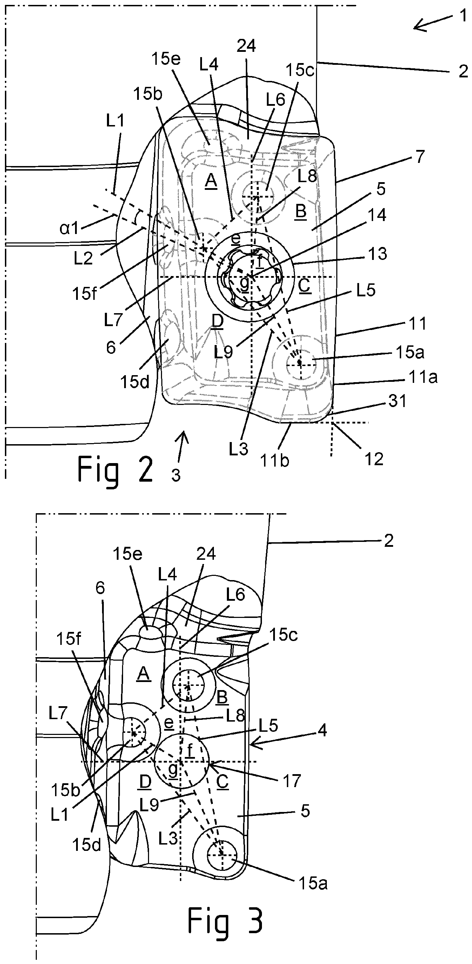

In Fig. 2 it is shown how the cutting insert 7 is detachably mounted in a fixed position in the insert seat 4 in a state of use of the cutting tool 1, i.e. during a cutting operation. In this position, the bottom surface 9 of the cutting insert 7 is arranged in contact with the first support surface 5 of the insert seat 4, the opposite top surface 8 of the cutting insert 7 serves as a rake face and the cutting edge 11, formed by the primary 11a, secondary 11b and corner 31 cutting edge portions, is arranged to constitute an active cutting edge of the cutting tool 1 and having an active cutting point 12 defined as the point in which imaginary extension lines of the primary 11a and secondary 11b portions of the active cutting edge 11 meet.

The cutting insert 7 is releasably secured in this fixed position in the insert seat 4 by the clamping element 13 engaging the recess 16 in the top surface 8 of the cutting insert 7 and acting on the cutting insert 7 with a force so as to keep it in place in the insert seat. Further described, the clamping element 13 has a front end fixedly secured in a central bore 17 in the first surface 5 of the insert seat 4, by a threaded connection, a rear end with a head portion wider than the recess 16 urging against recess adjacent portions of the cutting insert 7, and an intermediate portion of the clamping element 13 extending through the cutting insert 7 in the recess 16 thereof.

This force asserted by the clamping element 13 includes a first force component in a direction from the top surface 8 of the cutting insert 7 towards the first support surface 5 of the insert seat 4 urging the bottom surface 9 of the cutting insert 7 against the first support surface 5 of the insert seat 4. The force further includes a second force component in a direction from a recess center 14 towards the second support surface 6 of the insert seat 4, as shown by the imaginary line L2, urging a part of the peripheral surface 10 of the cutting insert 7 against the second support surface 6.

This second force component is achieved by an offset arrangement of the central bore 17 of the first support surface 5 of the insert seat 4 and the recess 16 of the cutting insert 7 causing a tension in the clamping element 13 by fixation thereof in the central bore 17 urging this and thereby the cutting insert 7 towards the second support surface 6 of the insert seat 4.

The first support surface 5 of the insert seat 4 is provided with three protrusions 15a-15c. These protrusions form first, second, and third contact points at the first support surface 5 for the bottom surface 9 of the cutting insert 7. In a top view straight towards the first support surface 5 of the insert seat 4 (Fig. 2) a first protrusion 15a is located between the recess center 14 of the cutting insert 7 and an edge support point defined as a point on the first support surface 5 with the smallest distance to the active cutting point 12 (commonly referred to as the Pk-point), i.e. between the recess center 14 and a point on an outer edge of the first support surface, closest to the active cutting point 12.

The distance from a first protrusion center to the recess center 14 of the cutting insert 7 is more than 3.5 times larger than the distance from the first protrusion center to the edge support point, i.e. the first protrusion 15a, or at least the center providing the contact point thereof, is located substantially closer to the edge support point than to the recess center 14 thereby providing a strong support for the cutting insert 7 close to the active cutting edge where it is subjected to large forces.

A second protrusion 15b is in the same view located between the recess center 14 of the cutting insert 7 and the second support surface 6 of the insert seat 4. An angle α1 formed between a first imaginary straight line L1 from the recess center 14 of the cutting insert 7 to a second protrusion center and the imaginary straight line L2 from the recess center 14 of the cutting insert 7 in the direction of the second force component is less than 10 degrees, i.e. the second protrusion 15b, or at least the center providing the contact point thereof, is located in proximity of the second force component. The second protrusion 15b is further arranged such that the imaginary straight line L2 from the recess center 14 of the cutting insert 7 in the direction of the second force component intersect the second protrusion 15b, i.e. extends within boundary lines thereof, in said top view. Hence, the second protrusion 15b is arranged to balance the second force component thereby stabilizing the cutting insert 7 in the fixed position.

A third protrusion 15c is in this view located in a position such that imaginary straight lines L3-L5 connecting the centers of the first 15a, second 15b, and third 15c protrusions together form a first triangular shape enclosing the recess center 14 of the cutting insert 7.

In further detail, the third protrusion 15c is located such that imaginary straight lines L4, L8, L1 connecting the second protrusion center, the third protrusion center and the recess center 14 together form a second triangular shape e, imaginary straight lines L5, L9, L8 connecting the third protrusion center, the first protrusion center and the recess center 14 together form a third triangular shape f and imaginary straight lines L3, L1, L9 connecting the first protrusion center, the second protrusion center and the recess center 14 together form a fourth triangular shape g. The second e, third f, and fourth g triangular shapes together constitute said first triangular shape and have similar surface areas, namely, the surface area of the triangular shape of the second e, third f, and fourth g triangular shapes with the largest surface area is less than 10% larger than the surface area of the triangular shape of the second e, third f, and fourth g triangular shapes with the smallest surface area. This positioning of the three protrusions at the first support surface 5 has shown to provide an effective support for the cutting insert 7 during various kinds of cutting operations.

The first support surface 5 is further divided into four quadrants A-D in the top view thereof. These are defined by an imaginary straight line L6 extending in the direction of longitudinal extension of the tool body 2, in parallel with the first plane and through the recess center 14 of the cutting insert 7 and an imaginary straight line L7 extending perpendicular to said direction, in parallel with the first plane and through the recess center 14, i.e. forming a cross with the intersection point located in the recess center 14. A first A quadrant is defined as the quadrant in which the second force component extends and the second B, third C, and fourth D quadrants follow the first A quadrant in that order in a clockwise direction (see Fig. 2). The first 15a, second 15b and third 15c protrusions are further arranged at the first support surface 5 such that the first protrusion center is located in the third quadrant C, the second protrusion center is located in the first quadrant A and the third protrusion center is located in the second quadrant B.

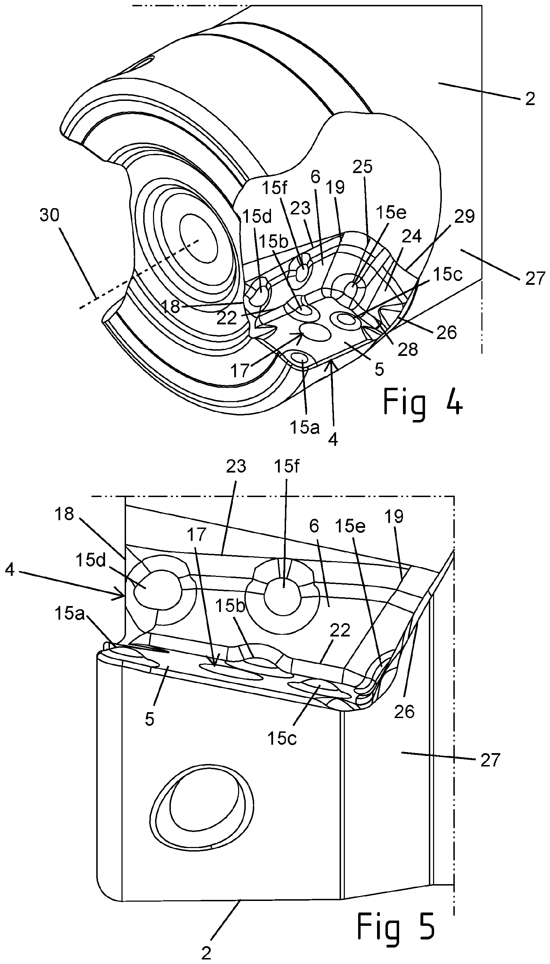

As seen in a side view of the insert seat 4 along the first support surface 5 and towards the second support surface 6 (Fig. 5) the second support surface 6 has a front end 18 and an opposite rear end 19, as seen in the direction of longitudinal extension of the tool body 2. It also has a bottom end 22, which connects the second support surface 6 to the first support surface 5, via a transition corner surface, and an opposite top end 23 located farthest away from the first support surface 5.

The second support surface 6 is provided with a fourth protrusion 15d and a sixth protrusion 15f, forming first and second contact points for the peripheral surface 10 of the cutting insert 7 at the second support surface 6.

The fourth protrusion 15d is arranged such that a distance from a fourth protrusion center to the bottom end 22 of the second support surface 6 is more than 1.3 times larger than a distance from the fourth protrusion center to the top end 23 of the second support surface 6, and such that a distance from the fourth protrusion center to the rear end 19 of the second support surface 6 is more than 6 times larger than a distance from the fourth protrusion center to the front end 18 of the second support surface 6. Simply described, the fourth protrusion 15d is arranged in the top front corner of the second support surface 6, as seen in this side view.

The sixth protrusion 15f is arranged with a center thereof between the fourth protrusion center and the rear end 19 of the second support surface 6 as seen in a length direction of the second support surface 6 from the front 18 towards the rear 19 end thereof, and between the fourth protrusion center and the top end 23 of the second support surface 6 as seen in a height direction of the second support surface 6 from the bottom 22 towards the top 23 end thereof. The sixth protrusion 15f is further arranged such that, in the top view straight towards the first support surface 5 of the insert seat 4 (Fig. 2), the imaginary straight line L2 from the recess center 14 of the cutting insert 7 in the direction of the second force component intersect the sixth protrusion 15f.

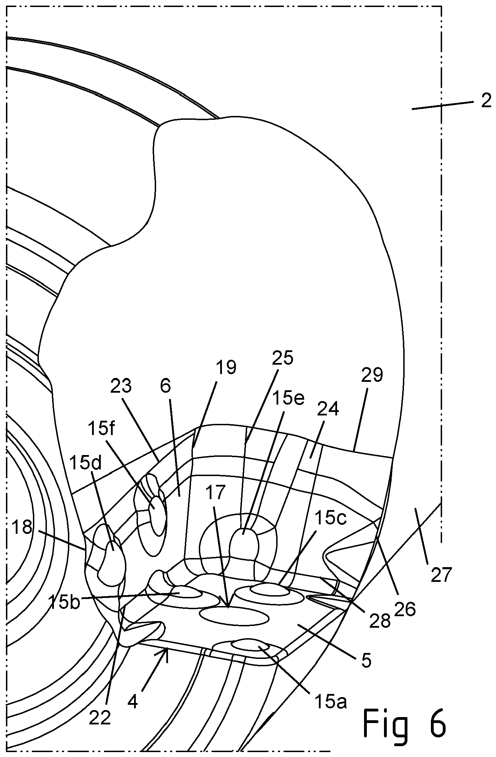

As seen in a front view of the insert seat 4 along the first support surface 5 and straight towards the third support surface 24 (as may be visualized in Fig. 6), the third support surface 24 has an inner end 25 connected to the rear end 19 of the second support surface 6, via a transition corner surface, and an opposite outer end 26 located closer to, and more specifically at, a peripheral surface 27 of the tool body 2. The third support surface 24 further has a bottom end 28, which connects the third support surface 24 to the first support surface 5, via a transition corner surface, and an opposite top end 29 located farthest away from the first support surface 5.

The third support surface 24 is provided with a fifth protrusion 15e forming a first contact point for the peripheral surface 10 of the cutting insert 7 at the third support surface 24. The fifth protrusion 15e is arranged such that a distance from the fifth protrusion center to the top end 29 of the third support surface 24 is more than 6 times larger than a distance from a fifth protrusion center to the bottom end 28 of the third support surface 24, and such that a distance from the fifth protrusion center to the outer end 26 of the third support surface 24 is more than 6 times larger than a distance from the fifth protrusion center to the inner end 25 of the third support surface 24. Accordingly, the fifth protrusion 15e is located in the bottom inner corner of the third support surface, as seen in said front view.

Each of the six protrusions 15a-15f arranged in the insert seat 4 is formed with a convex contact surface provided by the protrusions having a semi-ellipsoid or semi-spherical design. Each protrusion thereby provides a small and precise point of contact against the associated surface 9, 10 of the cutting insert 7 in contact therewith and together they provide six strategically positioned contact points between the cutting insert 7 and the insert seat 4 effectively locking the cutting insert in the six degrees of freedom and minimizing movement thereof during cutting operations.

Fixation of cutting inserts in associated insert seats is a fundamental part of the machining industry. Minimizing insert movement during a machining operation is crucial to ensure quality aspects such as durability, reliability, and repeatability. The innovative design of the cutting tool 1 according to the present invention, with semi-ellipsoidal or semi-spherical protrusions strategically positioned in the insert seat 4, offers several advantages in this regard. An even pressure distribution in the different parts of the cutting portion 3 during a cutting operation, reduced movement of the cutting insert 7 relative to the insert seat 4 and increased performance and lifespan of the cutting tool 1, to mention a few examples.

In essence, it is the strategic positioning of the protrusions thereby contact points between insert and insert seat that is key to these advantages, making these taking up forces in any direction and ensuring the contact between the cutting insert and insert seat is maintained at all times.

The invention is of course not in any way restricted to the embodiment thereof described above. On the contrary, many possibilities to modifications thereof will be apparent to a person with ordinary skill in the art without departing from the basic idea of the invention such as defined in the appended claims.

A distance from one point, line, end etc. to another should be interpreted as the shortest possible distance therebetween. For instance, the distance between a point and a top end should be measured from said point to a point along said top end located at the smallest distance to said point.

A "center" as used to describe for instance a "recess center" or "first protrusion center" should be interpreted as referring to the center point of the recess or first protrusion as measured by viewing the recess or first protrusion in a two-dimensional view from above.

Where it is stated that a surface extends in a plane, it does not necessarily imply that the surface is entirely flat or that every part of it exists within the same plane. Instead, this phrase primarily refers to the dominant extension of the surface.

## Claims

1. A cutting tool (1) comprising a tool body (2) having at least one cutting portion (3), the at least one cutting portion (3) comprising:
- an insert seat (4) having a first support surface (5) extending in a first plane and a second support surface (6) extending in a second plane forming an angle with the first plane,
- a cutting insert (7) having a top surface (8), an opposite bottom surface (9), a peripheral surface (10) extending therebetween and at least one cutting edge (11) comprising a primary cutting edge portion (11a) and a secondary cutting edge portion (11b) formed at a transition between the top surface (8) and the peripheral surface (10), the cutting insert (7) further has a recess (16) provided in the top surface (8) thereof, and
- a clamping element (13), wherein
the cutting insert (7) is detachably mounted in a fixed position in the insert seat (4), in which the bottom surface (9) of the cutting insert (7) is arranged in contact with the first support surface (5) of the insert seat (4), the opposite top surface (8) of the cutting insert (7) serves as a rake face and the at least one cutting edge (11) is arranged to constitute an active cutting edge of the cutting tool (1) and having an active cutting point (12) defined as the point in which imaginary extension lines of the primary (11a) and secondary (11b) portions of the active cutting edge (11) meet,
the first support surface (5) has an edge support point defined as a point on the first support surface (5) with the smallest distance to the active cutting point (12),
the clamping element (13) is arranged and configured to releasably secure the cutting insert (7) in the fixed position in the insert seat (4) by engaging the recess (16) in the top surface (8) of the cutting insert (7) and acting on the cutting insert (7) with a force comprising a first force component in a direction from the top surface (8) of the cutting insert (7) towards the first support surface (5) of the insert seat (4) and a second force component in a direction from a recess center (14) towards the second support surface (6) of the insert seat (4),
***characterized* in that** the first support surface (5) of the insert seat (4) is provided with at least three protrusions (15a-15c) forming first, second and third contact points at the first support surface (5) for the bottom surface (9) of the cutting insert (7), wherein the at least three protrusions (15a-15c) are positioned on the first support surface (5) of the insert seat (4) such that, in a top view straight towards the first support surface (5),
a first protrusion (15a) is located between the recess center (14) and the edge support point, wherein a distance from a first protrusion center to the recess center (14) is larger than a distance from the first protrusion center to the edge support point, a second protrusion (15b) is located between the recess center (14) and the second support surface (6) of the insert seat (4), wherein an angle (α1) formed between a first imaginary straight line (L1) from the recess center (14) to a second protrusion center and a second imaginary straight line (L2) from the recess center (14) in the direction of the second force component is 20 degrees or less, and
a third protrusion (15c) is located in a position such that imaginary straight lines (L3-L5) connecting the first protrusion center, the second protrusion center and the third protrusion center together form a first triangular shape enclosing the recess center (14).

2. A cutting tool (1) according to claim 1, ***characterized* in that** the recess (16) of the cutting insert (7) is arranged in a center of the top surface (8) thereof.

3. A cutting tool (1) according to claim 2, ***characterized* in that** the recess (16) of the cutting insert (7) is in the form of a through hole extending from an entry in the top surface (8) to an exit in the bottom surface (9) of the cutting insert (7), that the first support surface (5) of the insert seat (4) is provided with a central bore (17), and that the clamping element (13) is a threaded fastener.

4. A cutting tool (1) according to claim 2 or 3, ***characterized* in that**, in the top view straight towards the first support surface (5) of the insert seat (4), an imaginary straight line (L6) extending in a direction of a longitudinal extension of the tool body (2) through the recess center (14) and an imaginary straight line (L7) extending perpendicular to said direction through the recess center (14) together divide the first support surface (5) of the insert seat (4) into four quadrants (A-D), wherein a first (A) quadrant is the quadrant in which the second force component extends and the second (B), third (C) and fourth (D) quadrants follow the first (A) quadrant **in that** order in a clockwise direction, and wherein the first protrusion center is located in the third quadrant (C), the second protrusion center is located in the first quadrant (A) and the third protrusion center is located in the second quadrant (B).

5. A cutting tool (1) according to any of the claims 2-4, ***characterized* in that**, in the top view straight towards the first support surface (5) of the insert seat (4), imaginary straight lines (L4, L8, L1) connecting the second protrusion center, the third protrusion center and the recess center (14) together form a second triangular shape (e), imaginary straight lines (L5, L9, L8) connecting the third protrusion center, the first protrusion center and the recess center (14) together form a third triangular shape (f) and imaginary straight lines (L3, L1, L9) connecting the first protrusion center, the second protrusion center and the recess center (14) together form a fourth triangular shape (g), wherein the second (e), third (f) and fourth (g) triangular shapes together constitute said first triangular shape and wherein the surface area of the triangular shape of the second (e), third (f) and fourth (g) triangular shapes with the largest surface area is less than 30% larger, preferably less than 20% larger and more preferably less than 10% larger than the surface area of the triangular shape of the second (e), third (f) and fourth (g) triangular shapes with the smallest surface area.

6. A cutting tool (1) according to any of the preceding claims, ***characterized* in that**, in the top view straight towards the first support surface (5) of the insert seat (4), the distance from the first protrusion center to the recess center (14) is at least 2 times, preferably at least 2.5 times, more preferably at least 3 times and even more preferably at least 3.5 times larger than the distance from the first protrusion center to the edge support point.

7. A cutting tool (1) according to any of the preceding claims, ***characterized* in that**, in the top view straight towards the first support surface (5) of the insert seat (4), the angle (α1) formed between the first imaginary straight line (L1) and the imaginary straight line (L2) from the recess center (14) in the direction of the second force component is 15 degrees or less, more preferably 10 degrees or less.

8. A cutting tool (1) according to any of the preceding claims, ***characterized* in that**, in the top view straight towards the first support surface (5) of the insert seat (4), the imaginary straight line (L2) from the recess center (14) in the direction of the second force component intersect the second protrusion (15b).

9. A cutting tool (1) according to any of the preceding claims, ***characterized* in that** the second support surface (6) is arranged to extend at a first peripheral side of the first support surface (5) away from the first support surface (5) in a said second plane forming an angle of 70-110 degrees with the first plane in which the first support surface (5) extends.

10. A cutting tool (1) according to any of the preceding claims, ***characterized* in that** the second support surface (6) is provided with a fourth protrusion (15d) forming a first contact point for the peripheral surface (10) of the cutting insert (7) at the second support surface (6) thereby a fourth contact point for the cutting insert (7) in the insert seat (4).

11. A cutting tool (1) according to claim 10, ***characterized* in that**, in a side view of the insert seat (4) along the first support surface (5) and towards the second support surface (6), the second support surface (6) has a front end (18) and an opposite rear end (19), as seen in a direction of a longitudinal extension of the tool body (2), as well as a bottom end (22) by which the second support surface (6) is connected to the first support surface (5) and an opposite top end (23) located farthest away from the first support surface (5), wherein the fourth protrusion (15d) is arranged such that a distance from a fourth protrusion center to the bottom end (22) of the second support surface (6) is larger than a distance from the fourth protrusion center to the top end (23) of the second support surface (6) and a distance from the fourth protrusion center to the rear end (19) of the second support surface (6) is larger than a distance from the fourth protrusion center to the front end (18) of the second support surface (6).

12. A cutting tool (1) according to claim 9 in combination with claim 10 or 11, ***characterized* in that** the insert seat (4) further has a third support surface (24) extending in a third plane forming an angle with each of the first and the second planes, wherein the third support surface (24) is arranged to extend at a second peripheral side of the first support surface (5) away from the first support surface (5) in a said third plane forming an angle of 70-110 degrees with the first plane in which the first support surface (5) extends, and wherein the third support surface (24) is provided with a fifth protrusion (15e) forming a first contact point for the peripheral surface (10) of the cutting insert (7) at the third support surface (24) thereby a fifth contact point for the cutting insert (7) in the insert seat (4).

13. A cutting tool (1) according to claim 12, ***characterized* in that** in a front view of the insert seat (4) along the first support surface (5) and straight towards the third support surface (24), the third support surface (24) has an inner end (25) by which it is connected to the rear end (19) of the second support surface (6), and an opposite outer end (26) located closer to a peripheral surface (27) of the tool body (2) than the inner end (25), as well as a bottom end (28) by which the third support surface (24) is connected to the first support surface (5) and an opposite top end (29) located farthest away from the first support surface (5), wherein the fifth protrusion (15e) is arranged such that a distance from the fifth protrusion center to the top end (29) of the third support surface (24) is larger than a distance from a fifth protrusion center to the bottom end (28) of the third support surface (24) and a distance from the fifth protrusion center to the outer end (26) of the third support surface (24) is larger than a distance from the fifth protrusion center to the inner end (25) of the third support surface (24).

14. A cutting tool (1) according to any of the claims 10-13, ***characterized* in that** the second support surface (6) is further provided with a sixth protrusion (15f) forming a second contact point for the peripheral surface (10) of the cutting insert (7) at the second support surface (6), wherein the sixth protrusion (15f) is arranged with a center thereof between the fourth protrusion center and the rear end (19) of the second support surface (6) as seen in a length direction of the second support surface (6) from the front (18) towards the rear (19) end thereof, and between the fourth protrusion center and the top end (23) of the second support surface (6) as seen in a height direction of the second support surface (6) from the bottom (22) towards the top (23) end thereof, and wherein, in the top view straight towards the first support surface (5) of the insert seat (4), the imaginary straight line (L2) from the recess center (14) in the direction of the second force component intersect the sixth protrusion (15f).

15. A cutting tool (1) according to any of the preceding claims, ***characterized* in that** each said protrusion (15a-15f) is formed with a convex contact surface thereby configured to provide a precise point of contact against the associated surface (9, 10) of the cutting insert (7) in contact therewith.
